# EUROPEAN PATENT APPLICATION

(11) **EP 4 756 883 A1**
(43) Date of publication of application: **10.06.2026**
(21) Application number: 25182389.4
(22) Date of filing: 12.06.2025
(51) Int. Cl.: H01M 4/04, H01M 4/13, H01M 4/70, H01M 10/04, H01M 50/103, H01M 50/533, H01M 4/02

(54) **ELECTRODE ASSEMBLY AND SECONDARY BATTERY INCLUDING THE ELECTRODE ASSEMBLY**

(30) Priority: 06.12.2024 KR 20240180420
(71) Applicant: SAMSUNG SDI CO., LTD., Yongin-si, Gyeonggi-do 17084 (KR)
(72) Inventor: Bae, Kwang Soo, Yongin-si, Gyeonggi-do 17084 (KR); Cho, Seong Bong, Yongin-si, Gyeonggi-do 17084 (KR); Lim, Shin Gwon, Yongin-si, Gyeonggi-do 17084 (KR)
(74) Representative: Gulde & Partner

(57) **Abstract**

An electrode assembly according to the embodiment includes a first electrode that includes including a first current collector, a first active material layer on the first current collector, and an insulating member. The electrode assembly also includes a second electrode that includes a second current collector and a second active material layer on the second current collector. A separator is positioned between the first electrode and the second electrode. The first current collector comprises an uncoated portion where the first active material layer is not provided, and the first uncoated portion comprises a first region. A second region is between the first region and the first active material layer, with the insulating member being disposed in the second region, and with the second region including at least one open region.

## Description

### BACKGROUND

### 1. Field

Embodiments relate to an electrode assembly and a secondary battery including the electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not form the prior art.

### SUMMARY

Embodiments provide an electrode assembly and a secondary battery that are safer.

The electrode assembly according to the embodiment includes a first electrode including a first current collector, a first active material layer on the first current collector, and an insulating member, a second electrode including a second current collector and a second active material layer on the second current collector, and a separator between the first electrode and the second electrode, the second electrode is larger than the first electrode, the first current collector comprises an uncoated portion where the first active material layer is not provided, the first uncoated portion comprises a first region; and a second region between the first region and the first active material layer, the insulating member is disposed on the second region, and the second region comprises at least one open region.

The first electrode comprises at least one electrode tab formed by notching the first region.

The open region extends from the end of the second region toward the first active material layer.

The open region includes a first open part and a second open part, the first open part is formed by removing a part of the first current collector and the insulating member, and the second open part is formed by removing a part of the first current collector and the first active material layer.

The length of the second open part is shorter than the length of the first open part.

The length of the second open part is 10% to 20% of the length of the first open part.

The thickness of the insulating member is less than or equal to a thickness of the first active material layer.

The open region comprises a 1a open region, a 1b open region, and a 1c open region, the 1a open region is closest to the at least one first electrode tab, the 1c open region is farthest from the at least one first electrode tab, and the 1b open region is disposed between the 1a open region and the 1c open region

The at least one electrode tab includes two or more electrode tabs, and 1a open region is disposed between the electrode tabs.

The sizes of the 1a open region, the 1b open region, and the 1c open region are different.

The size of the 1a open region is larger than the size of at least one of the 1b open region and the 1c open region.

The size of the open region decreases in a direction moving away from the first electrode tab such that the size of the 1c open region is the smallest of the open regions.

The distance between the open regions increases in a direction moving away from the first electrode tab.

The first electrode includes (i) a first end of the second region, (ii) a second end facing the first end, and (iii) a third end and a fourth end connecting the first end and the second end, and the first electrode further comprises an open region formed in at least one of the second end, the third end, and the fourth end.

The at least one open region is a 1-1 open region is formed at the first end, a 1-2 open region is formed at the second end, a 1-3 open region is formed at the third end, a 1-4 open region is formed at the fourth end, and the size of the 1-1 open region is larger than at least one of the 1-2 open region, the 1-3 open region, and the 1-4 open region.

The uncoated portion further comprises a third region, the first region and the second region extend in the width direction of the first electrode, the third region extends in the length direction of the first electrode, a first insulating member is disposed in the second region, and a second insulating member is disposed in the third region.

The first electrode includes (i) a first end of the second region; (ii) a second end facing the first end; and (iii) a third end and a fourth end connecting the first end and the second end, wherein the third end is an end of the third region, and the first electrode further comprises an open region formed in at least one of the second end, the third end, and the fourth end.

The first electrode further comprises an open region formed in at least one of the second end and the fourth end.

The second electrode comprises at least one open region, and the at least one open region of the second electrode is smaller than the at least one open region of the first electrode.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a perspective view showing a secondary battery according to an embodiment.
FIG. 2 is a side view showing the electrode assembly according to the embodiment.
FIGS. 3 to 5 are top views showing electrodes of the electrode assembly according to the embodiment.
FIG. 6 is a cross-sectional view taken along the region A-A' of FIG. 4.
FIG. 7 is a cross-sectional view taken along the region B-B' of FIG. 4.
FIG. 8 is an enlarged view showing the A region of FIG. 4.
FIGS. 9 to 12 are cross-sectional views taken along the region C-C' of FIG. 4.
FIG. 13 is another top view showing a first electrode according the embodiment.
FIG. 14 is a top view showing an electrode of the electrode assembly according to another embodiment.
FIGS. 15 and 16 are top views showing a first electrode according to another embodiment.
FIG. 17 is a top view showing a second electrode according to another embodiment.
FIG. 18 is another type of secondary battery to which the electrode assembly according to the embodiment is applied.
FIG. 19 is perspective view showing the battery module including the secondary battery according to the embodiment.
FIGS. 20 and 21 are perspective views showing a battery pack including battery modules according to some embodiments.
FIGS. 22 and 23 is a perspective view and a side view showing a vehicle including battery packs according to some embodiments.

### DETAILED DESCRIPTION OF EXEMPLARY EMBODIMENTS

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Hereinafter, an electrode assembly and a secondary battery according to an embodiment will be described with reference to the drawings.

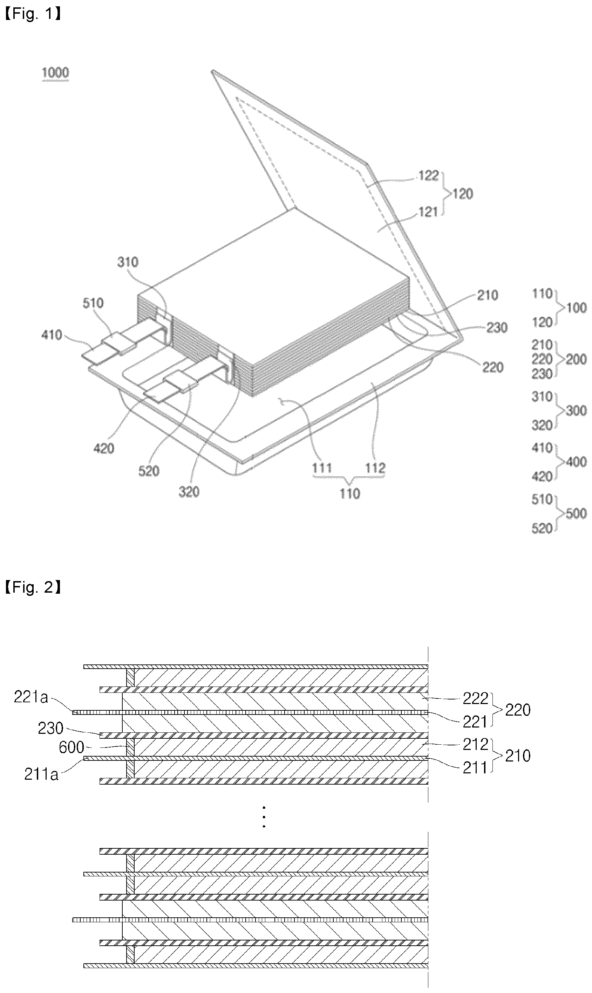

Referring to FIG. 1, the secondary battery 1000 according to the embodiment may include a case 100 and an electrode assembly 200.

The case 100 may include an accommodation part 110 and a cap part 120. The accommodation part 110 and the cap part 120 may be connected to each other. The case 100 may be formed in a pouch shape.

The accommodation part 110 may include a concave part 111 and a first sealing region 112. The accommodation part 110 may include an accommodation space. In detail, the accommodation part 110 may include an inner bottom surface and an inner side surface formed by the concave part 111. The accommodation space may be formed by the inner bottom surface and the inner side surface.

The first sealing region 112 may be disposed on an edge of the accommodation part 110. A sealing layer may be disposed on the first sealing region 112.

The cap part 120 may include a cover part 121 and a second sealing region 122.

The cover part 121 may cover the accommodation part 110. In detail, the cover part 121 may cover the electrode assembly 200 accommodated in the accommodation part 110.

The second sealing region 122 may be disposed on an edge of the cap part 120. A sealing layer may be disposed on the second sealing region 122. The first sealing region 112 and the second sealing region 122 may overlap each other. In detail, when the accommodation part 110 is covered by the cap part 120, the first sealing region 112 and the second sealing region 122 may face each other. Accordingly, the accommodation part 110 and the cap part 120 may be bonded by the sealing layer.

The electrode assembly 200 may be accommodated in the case 100. In detail, the electrode assembly 200 may be accommodated in the accommodation space of the case. An electrolyte may also be accommodated in the accommodation space.

In the depicted embodiment, one electrode assembly is accommodated in the case. However, the present disclosure is not limited thereto. That is, two or more electrode assemblies may be accommodated in the case.

The electrode assembly 200 may include a first electrode 210, a second electrode 220, and a separator 230. The electrode assembly 200 may be formed by stacking the first electrode 210, the second electrode 220, and the separator 230. In another embodiment, the electrode assembly may be a Z stack electrode assembly in which the first electrode 210 and the second electrode 220 are provided to both sides of the separator 230 and bent to a Z-shaped stack.

The first electrode 210 may include a first current collector and a first active material layer on the first current collector. The first current collector be a metal foil such as aluminum or an aluminum alloy. The first active material layer may include a transition metal oxide. For example, the first electrode 210 may be a positive electrode.

The first electrode 210 may be connected to a first electrode tab 310 of the electrode tabs 300. The first active material layer is not disposed on the first electrode tab 310. The first electrode tab 310 may be welded to the first current collector where the first active material layer is not provided. In other embodiments, the first electrode tab 310 may be integrally formed with the first current collector. The first current collector may include, for example, a first uncoated portion where the first active material layer is not provided. The first uncoated portion may be the first electrode tab 310. The first electrode tab 310 may be formed from the same material as the first current collector. In other words, the first electrode tab 310 may be a substrate tab.

The second electrode 220 may include a second current collector and a second active material layer on the second current collector. The second current collector be formed from a metal foil such as copper, a copper alloy, nickel, or a nickel alloy. The second active material layer may include graphite or carbon. The second electrode 220 may be a negative electrode.

The second electrode 220 may be connected to a second electrode tab 320 of the electrode tabs 300. The second active material is not disposed on the second electrode tab 320. The second electrode tab 320 may be welded to the second current collector where the second active material layer is not provided. In other embodiments, the second electrode tab 320 may be integrally formed with the second current collector. For example, the second current collector may include a second uncoated portion where the second active material layer is not provided. The second uncoated portion may be the second electrode tab 320. The second electrode tab 320 may be formed from the same material as the second current collector. In other words, the second electrode tab 320 may be a substrate tab.

Each of the first electrode tab 310 and the second electrode tab 320 may be connected to the lead 400. For example, the first electrode tab 310 may be connected to the first lead 410. In particular, the first electrode tab 310 may be connected to a first external terminal by the first lead 410. Similarly, the second electrode tab 320 may be connected to the second lead 420, and the second electrode tab 320 may be connected to a second external terminal by the second lead 420. The first lead 410 may be formed from the same material as the first electrode tab. And, the second lead 420 may be formed from the same material as the second electrode tab. The electrode tabs 310 and 320 and the leads 410 and 420 may be coupled to each other by welding.

An insulating layer 500 may be disposed on the lead 400. For example, a first insulating layer 510 may be disposed on the first lead 410. The first insulating layer 510 may surround one region of the first lead 410. The second insulating layer 520 may be disposed on the second lead 420 and surround one region of the second lead 420. The lead 400 may be insulated from the case 100 by the insulating layer 500. And, the lead 400 and the case 100 may be easily bonded to each other by the insulating layer 500 and the sealing layer. Also, the first lead 410 and the second lead 420 may be insulated from each other by the insulating layer 500.

Referring to FIG. 2, the electrode assembly 200 may be formed as a stack. In detail, the first electrode 210, the second electrode 220, and the separator 230 may be stacked, with the separator 230 being disposed between the first electrode 210 and the second electrode 220.

The first electrode 210 may include the first current collector 211 including the first uncoated portion 211a and the first active material layer 212 on the first current collector 211. The first active material layer 212 may be disposed on a region other than the first uncoated portion 211a. The first active material layer 212 may be disposed on at least one of the surfaces of the first current collector 211.

The first active material layer 212 may include a positive active material. As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹dGₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe2₍PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The second electrode 220 may include the second current collector 221 including a second uncoated portion 221a and a second active material layer 222 on the second current collector 221. The second active material layer 222 may be disposed on a region other than the second uncoated portion 221a. The second active material layer 222 may be disposed on at least one of one surface or the other surface of the second current collector 221.

The second active material layer 222 may include a negative active material. The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The first electrode 210 and the second electrode 220 may be different sized. For example, the area of the first electrode 210 and the area of the second electrode 220 may be different. Accordingly, the sizes of the first active material layer 212 and the second active material layer 222 may be different from each other. In a specific example, the length of the second active material layer 222 may be longer than the length of the first active material layer 212.

In general, the positive electrode has a higher capacity than the negative electrode and a faster lithium intercalation/deintercalation rate. Accordingly, when a storage capacity of lithium ions is insufficient in the negative electrode, lithium ions from the positive electrode are not all intercalated into the negative electrode. Accordingly, a dendrite phenomenon in which lithium is deposited on the negative electrode may occur. As the dendrite grows, the separator may be damaged. As a result, the first electrode 210 and the second electrode 220 may be short-circuited.

In order to solve the such problems, the second electrode 220 may be made larger than the first electrode 210. And as the capacity of the second electrode 220 is increased, the dendrite phenomenon may be reduced or prevented.

The first electrode 210 may further include an insulating member 600. The insulating member 600 may be disposed on the first current collector 211. In detail, the insulating member 600 may be disposed on the first uncoated portion 211a. The insulating member 600 may be disposed on at least one of the surfaces of the first current collector 211. The insulating member 600 may be formed by coating an insulating material on the first current collector 211. That is, the insulating member 600 may be a coating layer. In other embodiments, the insulating member 600 may be formed by bonding an insulating film on the first current collector 211.

The insulating member 600 may be disposed adjacent to the first active material layer 212. For example, the insulating member 600 may be in contact with the first active material layer 212. In other embodiments, the insulating member 600 may be spaced apart from the first active material layer 212. The insulating member 600 may include a resin material or a ceramic material.

The electrode assembly 200 is formed by stacking the first electrode 210, the second electrode 220, and the separator 230. In some cases, the alignment of the first electrode 210 and the second electrode 220 may be misaligned due to a process error. As a result, an inversion phenomenon of the first active material layer 212 and the second active material layer 222 may occur. And the dendrite phenomenon may occur.

The electrode assembly according to the embodiment may include an insulating member disposed on a first current collector. With such a configuration, when the first electrode 210 and the second electrode 220 are misaligned, a reaction between the first electrode and the second electrode may be prevented from occurring in an undesired region. The dendrite phenomenon may thereby be reduced or prevented. And the secondary battery may be safer.

The first current collector 211, the first active material layer 212, and the insulating member 600 may be formed from different materials. Accordingly, the first current collector 211, the first active material layer 212, and the insulating member 600 may have different physical characteristics. For example, the first current collector 211, the first active material layer 212, and the insulating member 600 may have different elongation ratios. Thus, the first electrode may be bent by a difference in elongation of each layer. In detail, since the first electrode includes three layers having different elongation ratios, the bending of the first electrode may be greater than that of the second electrode. In another case, the bending of the region in which the insulating member is disposed may be greater than that of other regions.

When manufacturing the electrode assembly, the stack characteristics of the electrodes may be reduced by the bending of the first electrode. For example, the thickness of the electrode assembly may be increased by the bending of the first electrode. The capacity of the electrode assembly may thereby be reduced. Also, the first electrode and the second electrode may be misaligned by the bending of the first electrode. Thus, the reliability of the electrode assembly may be reduced.

In order to solve such problems, the electrode assembly may include an open region formed in the first electrode. Hereinafter, the open region formed in the first electrode will be described in detail.

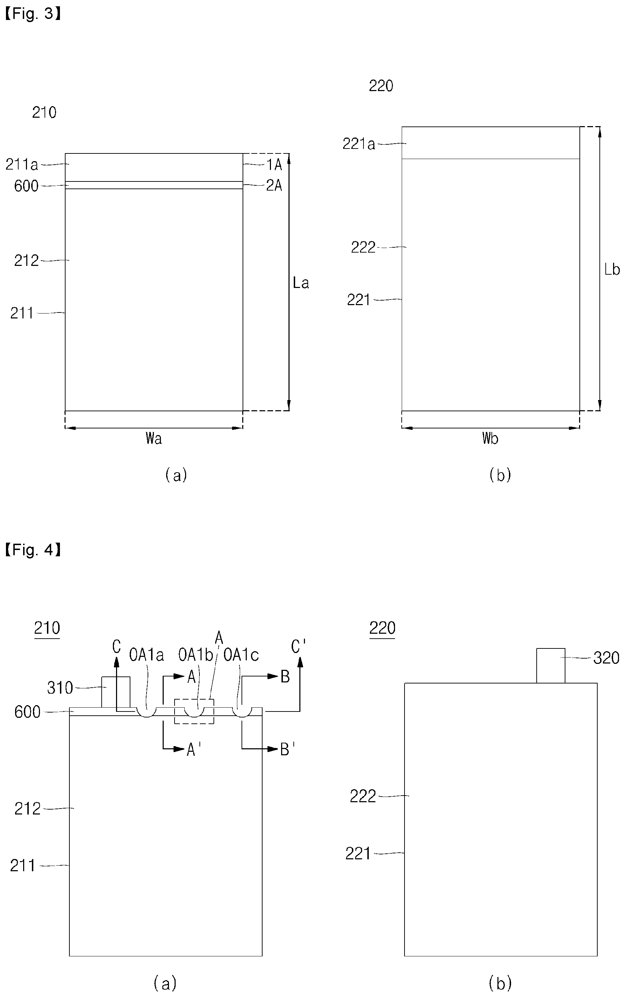

Referring to **FIGS.** 3 to 8, the first electrode 210 and the second electrode 220 may have different sizes.

Referring to FIG. 3, the first electrode 210 may have a 1a length La and a 1a width Wa. The second electrode 220 may have a 1b length Lb and a 1b width Wb. The 1a length La and the 1b length Lb may be different from each other. For example, the 1a length La may be less than the 1b length Lb.

The first active material layer 212 and the insulating member 600 may be disposed on the first current collector 211. The first current collector 211 may include a first uncoated portion 211a. The first uncoated portion 211a may be defined by the first active material layer 212. For example, the first uncoated portion 211a may be a region of the first current collector 211 where the first active material layer 212 is not provided.

The first uncoated portion 211a may be divided into a plurality of regions. For example, the first uncoated portion 211a may include a first region 1A and a second region 2A. The insulating member 600 may be disposed in the second region 2A. A surface of the first uncoated portion 211a is exposed in the first region 1A.

Accordingly, the insulating member 600 may be disposed between the first region 1A and the first active material layer 212. The insulating member 600 may extend along the width direction of the first current collector 211.

The second active material layer 222 may be disposed on the second current collector 221. But the insulating member 600 is not disposed on the second current collector 221. The second current collector 221 may include a second uncoated portion 221a. The second uncoated portion 221a may be defined by the second active material layer 222. For example, the second uncoated portion 221a may be a region of the second current collector 211 where the second active material layer 222 is not provided.

Referring to **FIGS.** 4 to 8, the first uncoated portion 211a and the second uncoated portion 221a may be notched.
For example, the second region 2A may be notched on the first uncoated portion 211a. As such, the first electrode 210 may include a first substrate tab formed by notching the second region. And the second electrode 220 may include a second substrate tab formed by notching the second uncoated portion 221a.

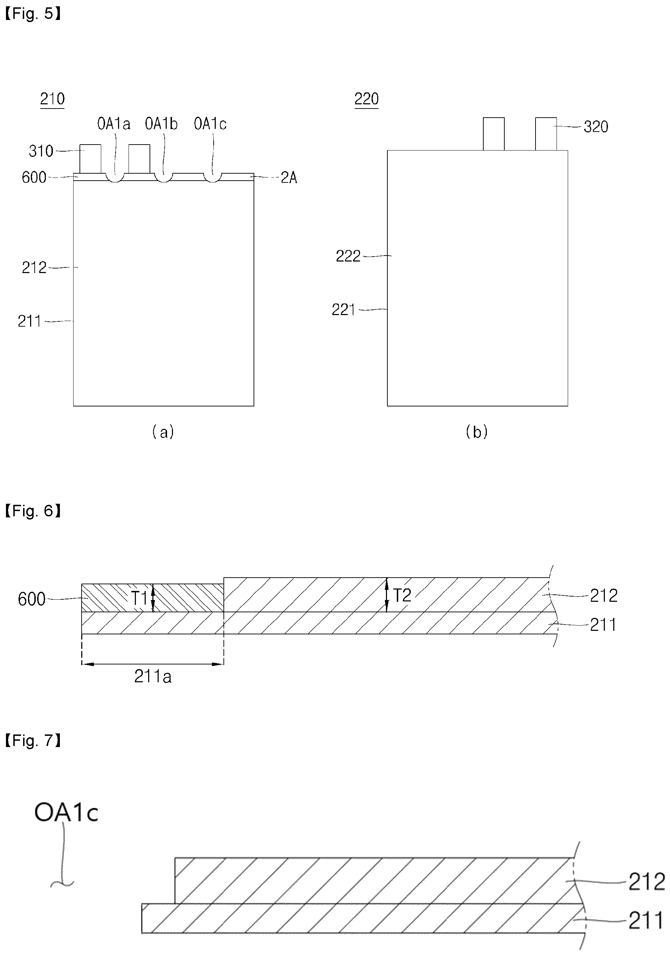

There may be one or more substrate tabs. For example, referring to FIG. 4, the first electrode and the second electrode may each include one substrate tab. In another embodiment shown in FIG. 5, the first electrode and the second electrode may each include a plurality of substrate tabs. The first substrate tab may be the first electrode tab 310, and the second substrate tab may be the second electrode tab 320.

The first electrode 210 may include one or more open regions. Referring to FIG. 4, the first electrode 210 may include a 1a open region OA1a, a 1b open region OA1b, and a 1c open region OA1c. Although three open regions are shown in the depicted embodiment, the present disclosure is not limited thereto.

Referring to FIG. 4, the 1a open region OA1a may be the open region closest to the first electrode tab 310. The 1c open region OA1c may be the open region farthest from the first electrode tab 310. The 1b open region OA1b may be an open region between the 1a open region OA1a and the 1c open region OA1c. The 1b open region OA1b may include at least one open region.

Referring to another embodiment shown in FIG. 5, the 1a open region OA1a may be an open region between the first electrode tabs 310. The 1c open region OA1c may be the open region farthest from the first electrode tab 310. The 1b open region OA1b may be an open region between the 1a open area OA1a and the 1c open area OA1c. The 1b open region OA1b may include at least one open region.

The open region may be formed at the end of the second region 2A. In detail, the open region may extend from the end of the second area 2A toward the first active material layer 212.

The open regions may be formed through the first current collector 211, the first active material layer 212, and the insulating member 600. For example, the open regions may be formed by removing parts of the first current collector 211 and the insulating member 600 from the second region 2A. And, the open regions may be formed by removing parts of the first current collector 211 and the first active material layer 212 in a region other than the second region 2A.

As shown in FIGS. 6 and 7, a portion of the insulating member 600 and the first active material layer 212 may be removed from the region where the open region is formed. The insulating member 600 may have a set thickness. For example, the thickness T1 of the insulating member may be less than or equal to the thickness T2 of the first active material layer. When the thickness T1 of the insulating member is greater than the thickness T2 of the first active material layer, the overall thickness of the electrode assembly may be increased by the insulating member. As a result, the process efficiency of the electrode assembly may be reduced by a step formed by the insulating member.

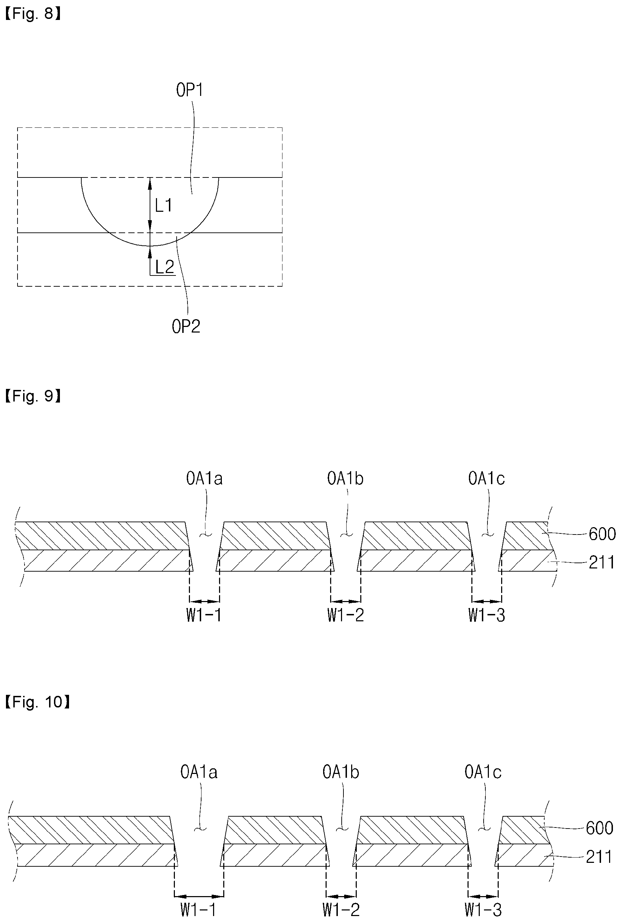

Referring to FIG. 8, the open region may be divided into a plurality of regions. For example, the open region may include a first open part OP1 and a second open part OP2. The first open part OP1 is a region where the second region 2A is removed. In detail, the first open part OP1 is a region where the first current collector 211 and the insulating member 600 are removed. The second open part OP2 is a region where the first current collector 211 and the first active material layer 212 are removed.

Sizes of the first open part OP1 and the second open part OP2 may be different from each other. In detail, the length L1 of the first open part may be different from the length L2 of the second open part. In more detail, the length L1 of the first open part may be longer than the length L2 of the second open part. For example, the length L2 of the second open part may be 10% to 20% of the length L1 of the first open part. When the length L2 of the second open part is less than 10% of the length L1 of the first open part, the insulating member may not be completely removed due to a process error. When the length L2 of the second open part exceeds 20% of the length L1 of the first open part, the area of the first active material layer is reduced. And the capacity of the electrode assembly may thereby be reduced.

In a particular example, the length L1 of the first open part may be 2 mm to 3 mm. The length L1 of the first open part may correspond to the width of the insulating member 600. And, the length L2 of the second open part may be 0.2 mm to 0.6 mm.

The electrode assembly according to the embodiment includes the open region formed in the first electrode. The first electrode includes the insulating member. Accordingly, three layers having different elongation ratios are disposed in a region where the insulating member is disposed. Accordingly, the bending of the region where the insulating member is disposed may be greater than that of other regions.

Further, the open region may be formed in a region where the insulating member is provided. A stress moving toward the region where the insulating member is provided may be dispersed by the open region(s). It is therefore possible to prevent the stress from being concentrated on an end of the first electrode. And it is therefore possible to prevent or reduce bending of the first electrode due to stress unevenness.

Referring to FIGS. 9 to 12, the open regions may have various sizes and/or intervals. FIGS. 9 to 12 are cross-sectional views of FIG. 4. However, the contents of FIGS. 9 to 12 may be equally applied to the first electrode of FIG. 5.

Referring to FIGS. 9 to 12, the 1a open region OA1a may have a 1-1 width W1-1. The 1b open region OA1b may have a 1-2 width W1-2. The 1c open region OA1c may have a 1-3 width W1-3. The widths may be the maximum width or maximum diameter of each open region.

Referring to FIG. 9, the 1-1 width W1-1, the 1-2 width W1-2, and the 1-3 width W1-3 may be the same or similar. And, intervals between the open regions may be the same or similar.

The 1a open region OA1a, the 1b open region OA1b, and the 1c open region OA1c may be formed in the same process by the same equipment. Accordingly, the process of forming the open regions is easy.

Referring to FIG. 10, the 1-1 width W1-1, the 1-2-th width W1-2, and the 1-3 width W1-3 may be different from each other. The intervals between the open regions may be the same or similar. For example, the 1-1 width W1-1 may be greater than the 1-2 width W1-2 and the 1-3 width W1-3. That is, the size of the 1a open region OA1a adjacent to the first electrode tab 310 may be larger than the size of other open regions. In another embodiment, the size of the 1a open region OA1a between the first electrode tabs 310 may be larger than the size of other open regions.

The bending of the first electrode may be greater in the first uncoated portion. Accordingly, an open region adjacent to the first electrode tab 310 or disposed between the first electrode tabs may be large. Thus, the bending of the first electrode may be reduced or prevented.

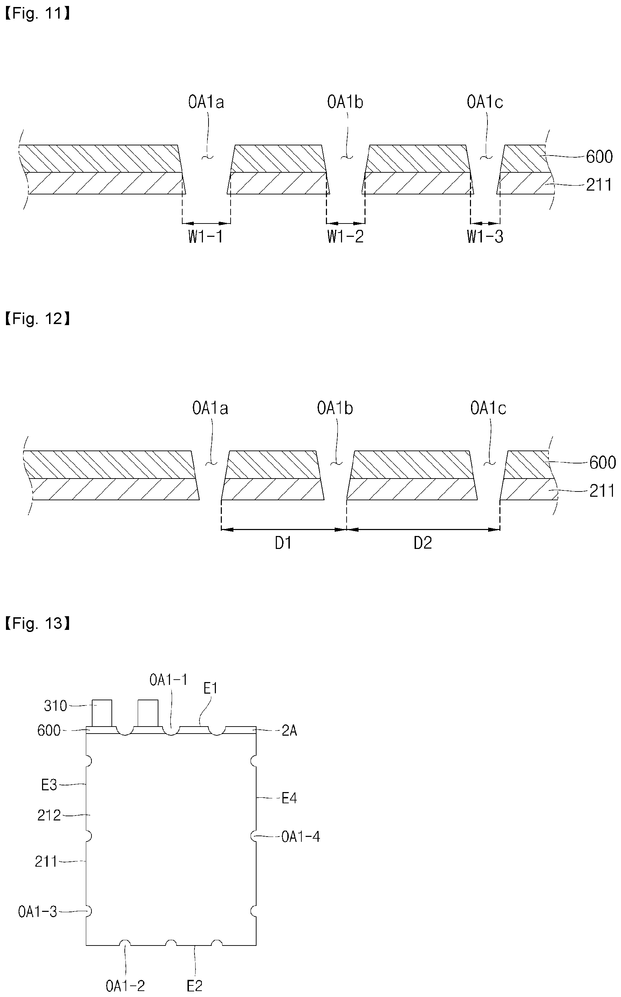

Referring to FIG. 11, the 1-1 width W1-1, the 1-2 width W1-2, and the 1-3 width W1-3 may be different from each other. The intervals between the open regions may be the same or similar. For example, the sizes of the open regions may decrease in a direction away from the first electrode tab 310. In detail, the sizes of the open parts may decrease from the 1a open region OA1a toward the 1c-th open region OA1c.

Accordingly, the 1-1- width W1-1 may be greater than the 1-2- width W1-2 and the 1-3 width W1-3. And, the 1-2 width W1-2 may be greater than the 1-3 width W1-3. That is, the sizes of the open regions may decrease from the 1a open region OA1a adjacent to the first electrode tab 310 toward the 1c open region OA1c. In another embodiment, the sizes of the open regions may decrease from the 1a open region OA1a between the first electrode tabs 310 in a direction moving toward the 1c open region OA1c.

as noted above, the bending of the first electrode may be greater in the first uncoated portion. Accordingly, the sizes of the open regions may decrease in a direction away from the first electrode tab 310. Accordingly, bending of the region adjacent to the first electrode tab may be prevented. Also, since the region removed by the open region is reduced, the strength of the first electrode may be improved.

Referring to FIG. 12, the 1-1 width W1-1, the 1-2 width W1-2, and the 1-3 width W1-3 may be the same or similar. Intervals between the open regions may be different. In detail, a distance D1 between the 1a open region OA1a and the 1b open region OA1b may be different from a distance D2 between the 1b open region OA1b and the 1c open region OA1c. For example, the interval between the open regions may vary in a direction moving away from the first electrode tab 310. In detail, the interval between the open regions may increase in the direction away from the first electrode tab 310. Accordingly, a density of the open region in a region close to the first electrode tab 310 may be greater than a density of an open region in a region far from the first electrode tab 310.

As noted above, the bending of the first electrode may be greater in the first uncoated portion. Accordingly, the interval of the open region may increase in a direction away from the first electrode tab. Therefore, the bending of the region adjacent to the first electrode tab may be reduced or prevented.

In the embodiments depicted in FIGS. 9 to 12 the width or interval of the open regions are different. However, the present disclosure is not limited thereto. For example, the width and the interval of the open regions may be different. In detail, as the distance from the first electrode tab increases, the width of the open regions may decrease and the interval between the open regions may increase. Accordingly, the strength of the first electrode may be maintained while bending of the first electrode is prevented.

Referring to FIG. 13, the open region may be formed IN a plurality of regions of the first electrode. The first electrode 210 may include a first end E1 in the second region, a second end E2 opposite to the first end E1, and a third end E3 and a fourth end E4 connecting the first end E1 and the second end E2. The first end E1 may be a boundary between the first region 1A and the second region 2A. The insulating member 600 may be disposed between the first end E1 and the first active material layer 212. The open region may be formed at the first end E1. And the open region may be formed at one or more of the second end E2, the third end E3, or the fourth end E4.

For example, the open region may be formed at the first end E1, the second end E2, the third end E3, and the fourth end E4. At least one 1-1 open region OA1-1 may be formed at the first end E1. At least one 1-2 open region OA1-2 may be formed at the second end E2. At least one 1-3 open region OA1-3 may be formed at the third end E3. At least one 1-4 open region OA1-4 may be formed at the fourth end E4.

The size of the 1-1 open region OA1-1 may be different from the sizes of other open regions. For example, the size of the 1-1 open region OA1-1 may be larger than the size of at least one of the 1-2 open region OA1-2, the 1-3 open region OA1-3, or the 1-4 open region OA1-4.

The 1-1 open region OA1-1 is formed by removing a part of the insulating member 600. Accordingly, the 1-1 open region OA1-1 may be formed to be larger than other open regions. And the 1-2 open region OA1-2, the 1-3 open region OA1-3, and the 1-4 open region OA1-4 may have a minimum size. Accordingly, the region in which part of the first active material layer 212 is removed may be minimized.

The electrode assembly according to the embodiment may include the first electrode having the open region formed in a plurality of regions. Therefore, bending of the first electrode may be reduced or prevented by the 1-1 open region OA1-1. And the first electrode may include at least one of the 1-2 open region OA1-2, the 1-3 open region OA1-3, or the 1-4 open region OA1-4. When stacking the first electrode, the second electrode, and the separator, the 1-2 open region OA1-2, the 1-3 open region OA1-3, and the 1-4 open region OA1-4 may be used as alignment marks of the first electrode. Thus, the alignment of the electrode assembly may be improved. The open regions may be disposed on the upper portion, the lower portion, and the side portion of the first electrode, respectively. Thus, the strength of the first electrode may be uniform at the upper portion, the lower portion, and the side portion of the first electrode. Further, the stress of the first electrode may be prevented from being concentrated in any one direction. Thus, bending of the first electrode may be prevented and the flatness of the first electrode may be improved.

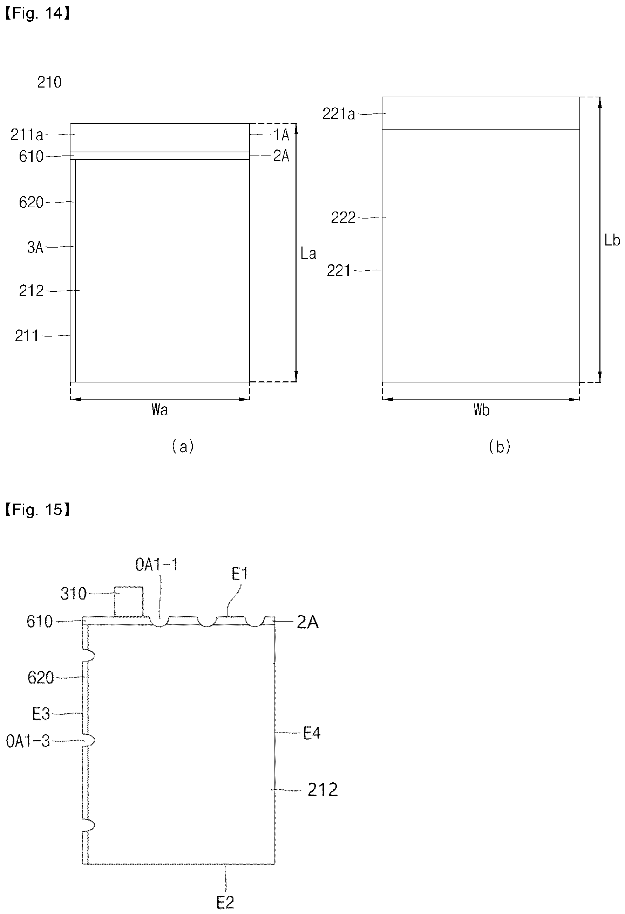

Hereinafter, the electrode assembly according to another embodiment will be described with reference to FIGS. 14 to 16. In the description of the electrode assembly according to this embodiment, descriptions that are identical or similar to those of the electrode assembly according to the previously described embodiments are omitted.

Referring to FIGS. 14 to 16, the first electrode 210 may have a 1a length La and a 1a width Wa. The second electrode 220 may have a 1b length Lb and a 1b width Wb. The 1a length La and the 1b length Lb may be different from each other. For example, the 1a length La may be less than the 1b length Lb. And the 1a width Wa and the 1b width Wb may be different from each other. For example, the 1a width Wa may be less than the 1b width Wb.

The first electrode 210 may include the first current collector 211, the first active material layer 212, and the insulating member. The insulating member may include a first insulating member 610 and a second insulating member 620.

The first current collector 211 may include the first uncoated portion 211a. The first uncoated portion 211a may be divided into a plurality of regions. For example, the first uncoated portion 211a may include a first region 1A, a second region 2A, and a third region 3A. The first region 1A and the second region 2A extend in the width direction of the first electrode. The third region 3A extends in the length direction of the first electrode.

The first insulating member 610 is disposed in the second region 2A. Thus, the first insulating member 610 extends in the width direction of the first electrode. The second insulating member 620 is disposed in the third region 3A. Thus, the second insulating member 620 extends in the length direction of the first electrode. A surface of the first uncoated portion 211a is exposed in the first region 1A.

The first insulating member 610 and the second insulating member 620 may contact each other. For example, the first insulating member 610 and the second insulating member 620 may be formed integrally.

When stacking the first electrode 210 and the second electrode 220 (as described above) the alignment of the first electrode 210 and the second electrode 220 may be misaligned due to a process error. Accordingly, the inversion phenomenon of the first active material layer 212 and the second active material layer 222 may occur, which may cause the dendrite phenomenon to occur. But in the electrode assembly according to another embodiment, the first insulating member and the second insulating member are disposed on the first current collector. Accordingly, when the first electrode 210 and the second electrode 220 are misaligned, a reaction between the first electrode and the second electrode may be prevented from occurring in an undesired region. Thus, the dendrite phenomenon of the electrode assembly may be reduced or prevented. And the secondary battery is safer.

Referring to FIG. 15, the first electrode 210 may include a plurality of open regions. The first electrode 210 may include a first end E1 of the second region, a second end E2 facing the first end (E1), and a third end E3 and a fourth end E4 connecting the first end E1 and the second end E2. The first end E1 may be a boundary between the first region 1A and the second region 2A. The third end E3 may be an end of the third region 3A. The first insulating member 610 may be disposed between the first end E1 and the first active material layer 212. The second insulating member 620 may be disposed between the third end E3 and the first active material layer 212. The open region may be formed at the first end E1 and the third end E3.

In detail, the first electrode 210 may include at least one 1-1 open region OA1-1 and at least one 1-3 open region OA1-3. The 1-1 open region OA1-1 may be formed at the first end E1. The 1-1 open region OA1-1 may be formed by removing parts of the first insulating member 610, the first current collector 211, and the first active material layer 212. The 1-3 open region OA1-3 may be formed at the third end E3. The 1-3 open region OA1-3 may be formed by removing parts of the second insulating member 620, the first current collector 211, and the first active material layer 212.

The size of the 1-1 open regions OA1-1 may be similar to the above-described embodiments. For example, the width and interval of the 1-1 open regions OA1-1 may be the same or similar. In another example, the width of the 1-1 open regions OA1-1 may decrease in a direction moving away from the first electrode tab 310. In yet another example, the interval of the 1-1 open regions OA1-1 may increase in a direction moving away from the first electrode tab 310.

The electrode tab is not formed at the third end E3. Accordingly, the width and interval of the 1-3 open regions OA1-3 may be the same or similar.

The sizes of the 1-1 open regions OA1-1 and the sizes of the 1-3 open regions OA1-3 may be different. For example, the 1-1 open regions OA1-1 may be larger than the 1-3 open regions OA1-3. And the interval of the 1-1 open regions OA1-1 and the interval of the 1-3 open regions OA1-3 may be different. For example, the interval of the 1-1 open regions OA1-1 may be shorter than the interval of the 1-3 open regions OA1-3. Accordingly, the ratio of the open region formed at the first end E1 may be greater than the ratio of the open region formed at the third end E3.

As described above, the first end E1 is connected to the first electrode tab 310. Accordingly, stress may be concentrated at the first end E1 as compared to the other ends. Accordingly, the ratio of the open region formed at the first end E1 may be greater than the ratio of the open region formed at the third end E3. Thus, the stress at the first end may be effectively distributed, thereby reducing or preventing the bending of the first electrode.

The electrode assembly according to another embodiment includes the open region formed in the first electrode. The first electrode includes the first insulating member and the second insulating member. Accordingly, three layers having different elongations are disposed in the region where the first insulating member and the second insulating member are disposed. Thus, the bending of the region where the insulating member is disposed may be greater than the bending of other regions. But the open region may be formed in each of the regions where the insulating member is disposed. Thus, the stress moving to the regions where the insulating member is disposed may be distributed by the open region(s). It is therefore possible to prevent the stress from being concentrated on one end of the first electrode, and it is possible to prevent or reduce the bending of the first electrode due to stress unevenness.

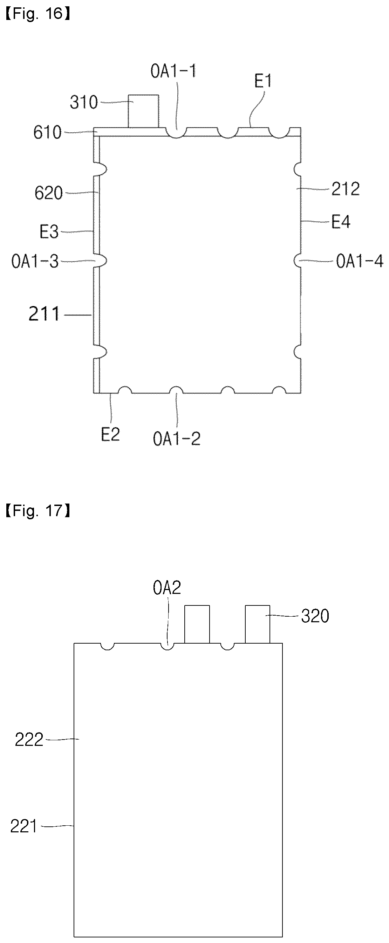

Referring to FIG. 16, the open region may be formed in a plurality of regions of the first electrode. For example, the open region may be formed in the first end E1 and the third end E3. And the open region may be formed in at least one of the second end E2 or the fourth end E4. For example, the open region may be formed in the first end E1, the second end E2, the third end E3, and the fourth end E4. At least one 1-1 open region OA1-1 may be formed in the first end E1. At least one 1-2 open region OA1-2 may be formed in the second end E2. At least one 1-3 open region OA1-3 may be formed at the third end E3. At least one 1-4 open region OA1-4 may be formed at the fourth end E4.

The sizes of the 1-1 open region OA1-1 and the 1-3 open region OA1-3 may be larger than at least one of the 1-2 open region OA1-2 or the 1-4 open region OA1-4.

The 1-1 open region OA1-1 and the 1-3 open region OA1-3 are formed by removing parts of the insulating member 600. Accordingly, the 1-1 open region OA1-1 and the 1-3 open region OA1-3 may be larger than the other open regions. And, the 1-2 open region OA1-2 and the 1-4 open region OA1-4 may be formed to have a minimum size. Accordingly, the amount of the first active material layer 212 that is removed can be minimized. Also, the electrode assembly according to this embodiment may include the first electrode in which open regions are formed in a plurality of regions. Accordingly, the bending of the first electrode may be reduced or prevented by the 1-1 open region OA1-1 and the 1-3 open region OA1-3.

The first electrode also may include at least one of the 1-2 open region OA1-2 or the 1-4 open region OA1-4. When stacking the first electrode, the second electrode, and the separator, the 1-2 open region OA1-2 and the 1-4 open region OA1-4 may act as alignment marks of the first electrode. Accordingly, the alignment of the electrode assembly may be improved. And the open regions may be disposed at the upper, lower, and side portions of the first electrode. Thus, the strength of the first electrode may be uniform at the upper, lower, and side portions. Further, the stress of the first electrode may be prevented from being concentrated in one direction. Thus, the bending of the first electrode may be prevented, and the flatness of the first electrode may be improved.

In the above descriptions, the open region is formed in a part of the first electrode. However, embodiments of the present disclosure are not limited thereto. The electrode assembly according to embodiments may include a second open region OA2 formed in the second electrode.

The second open region OA2 may be formed at one end of the second electrode. For example, the second open region OA2 may be formed at one end of the second electrode where the second electrode tab 320 is disposed. And the second open region OA2 may be disposed at a plurality of regions of the second electrode. For example, the second open region OA2 may be formed at all of the ends of the second electrode.

The size of the second open region OA2 may be different from the size of the open region of the first electrode. For example, the size of the second open region OA2 may be smaller than the size of the open region of the first electrode.

The second electrode includes the second current collector and the second active material layer, which may have different elongation rates. Thus, the second electrode might be bent due to the difference in elongation. But according to the present disclosure, the electrode assembly may include the second open region formed in the second electrode. Accordingly, the bending of the second electrode may be reduced or prevented by the second open region.

When stacking the first electrode, the second electrode, and the separator, the second open region may act as an alignment mark. Thus, the alignment of the first electrode and the second electrode may be improved, and the electrode assembly may be made safer.

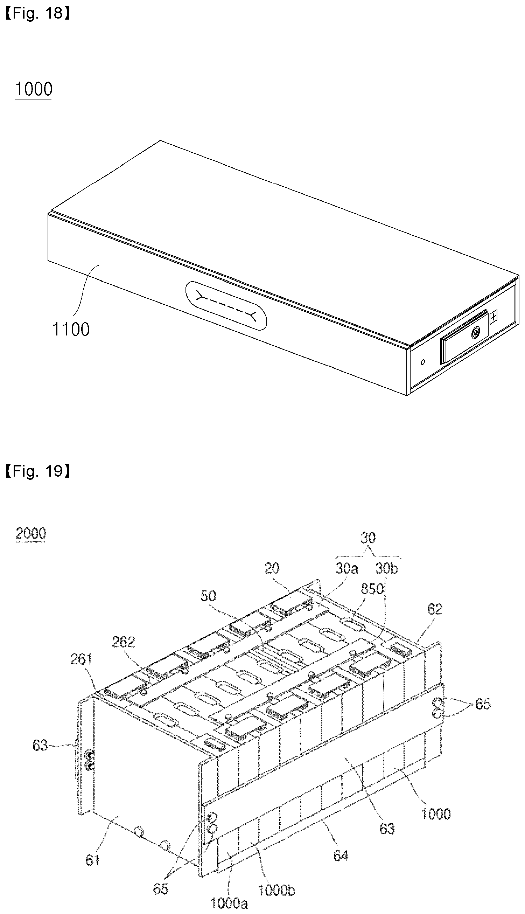

The electrode assembly according to the embodiments described herein may be used in secondary batteries of various shapes. For example, the electrode assembly may be used in the pouch-type secondary battery depicted in FIG. 1. In other embodiments, the electrode assembly may be used in the prismatic secondary battery 1000 depicted FIG. 18. In such a case, the electrode assembly is accommodated in a prismatic case 1100.

Hereinafter, a battery module including secondary batteries according to embodiments will be described with reference to FIG. 19.

Referring to FIG. 19, the battery module 2000 according to one or more example embodiments of the present disclosure includes terminal parts 261 and 262, a plurality of secondary battery 1000 arranged in one direction, a connection tab 20 connecting a secondary battery 1000a to an adjacent secondary battery 1000b, and a protection circuit module 30 having one end connected to the connection tab 20. The protection circuit module 30 may include a battery management system (BMS). Further, the connection tab 20 may include a body portion in contact with the terminal parts 261 and 262 between the adjacent secondary battery 1000a and 1000b and an extension portion extending from the body portion and connected to the protection circuit module 30. The connection tab 20 may be, for example, a bus bar.

Each secondary battery 1000 may include a battery case, an electrode assembly received (or accommodated) in the battery case, and an electrolyte. The electrode assembly and the electrolyte react electrochemically to store and release (e.g., generate) energy. Terminal parts 261 and 262 electrically connected to the connection tab 20 and a vent 850 as a discharge passage for gas generated inside the battery case may be provided on one side of (e.g., an upper side of) the secondary battery 1000. The terminal parts 261 and 262 of the secondary battery 1000 may be a positive electrode terminal 261 and a negative electrode terminal 262 having different polarities from each other, and the terminal parts 261 and 262 of the adjacent secondary battery 1000a and 1000b may be electrically connected to each other in series or parallel by the connection tab 20, to be described in more detail below. Although a serial connection has been described as an example, the connection structure is not limited thereto, and various connection structures may be employed as desired or necessary. In addition, the number and arrangement of secondary battery is not limited to the structure shown in FIG. 19 and may be changed as desired or necessary.

The plurality of secondary batteries 1000 may be arranged in (e.g., may be stacked in) one direction so that the wide surfaces of the secondary batteries 1000 face each other, and the plurality of secondary batteries 1000 may be fixed by the housings 61, 62, 63, and 64. The housings 61, 62, 63, and 64 may include a pair of end plates 61 and 62 facing the wide surfaces of the secondary battery batteries 1000 and a side plate 63 and a bottom plate 64 connecting the pair of end plates 61 and 62 to each other. The side plate 63 may support side surfaces of the secondary batteries 1000, and the bottom plate 64 may support bottom surfaces of the secondary batteries 1000. In addition, the pair of end plates 61 and 62, the side plate 63 and the bottom plate 64 may be connected by bolts 65 and/or any other suitable fastening members and methods known to those of ordinary skill in the art.

The protection circuit module 30 may have electronic components and protection circuits mounted thereon and may be electrically connected to connection tabs 20, to be described in more detail later. The protection circuit module 30 includes a first protection circuit module 30a and a second protection circuit module 30b extending along the direction in which the plurality of secondary batteries 1000 are arranged in different locations. The first protection circuit module 30a and the second protection circuit module 30b may be spaced from each other at a suitable or desired interval (e.g., a predetermined interval) and arranged parallel to each other to be electrically connected to adjacent connection tabs 20, respectively. For example, the first protection circuit module 30a extends on one side of the upper portion of the plurality of secondary batteries 1000 along the direction in which the plurality of secondary batteries 1000 are arranged, and the second protection circuit module 30b extends to the other upper side of the plurality of secondary batteries 1000 along the direction in which the plurality of secondary batteries 1000 are arranged. The second protection circuit module 30b may be spaced from the first protection circuit module 30a at a suitable or desired interval (e.g., a predetermined interval) with the vents 34 interposed therebetween but may be disposed parallel to the first protection circuit module 30a. As such, the two protection circuit modules are spaced from each other side-by-side along the direction in which the plurality of secondary batteries 1000 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 30a and the second protection circuit module 30b may be connected to each other by a conductive connection member 50. One side of the conductive connection member 50 is connected to the first protection circuit module 30a, and the other side thereof is connected to the second protection circuit module 30b so that the two protection circuit modules 30a and 30b can be electrically connected with each other.

The connection may be performed by any one of soldering, resistance welding, laser welding, projection welding and/or any other suitable connection methods known to those of ordinary skill in the art.

In addition, the connection member 50 may be or include, for example, an electric wire. In addition, the connection member 50 may be made of or include a material having elasticity or flexibility. By the connecting member 50, it may be possible to check and manage whether the voltage, temperature, and/or current of the plurality of secondary battery 1000 are normal or within a desired range. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 50.

In addition, when a secondary battery 1000 swells, shocks may be absorbed by the elasticity or flexibility of the connection member 50, thereby hindering or preventing the first and second protection circuit modules 30a and 30b from being damaged.

In addition, the shape and structure of the connection member 50 is not limited to the shape and structure shown in FIG. 19.

As described above, because the protection circuit module 30 is provided as the first and second protection circuit modules 30a and 30b, the area of the PCB constituting the protection circuit module can be reduced or minimized, and the space inside the battery module can be secured, which improves work efficiency by facilitating a fastening work for connecting the connection tab 20 and the protection circuit module 30 and repair work when an abnormality is detected in the battery module.

The secondary battery and battery modules according to the previously described example embodiments may be used to manufacture the battery pack.

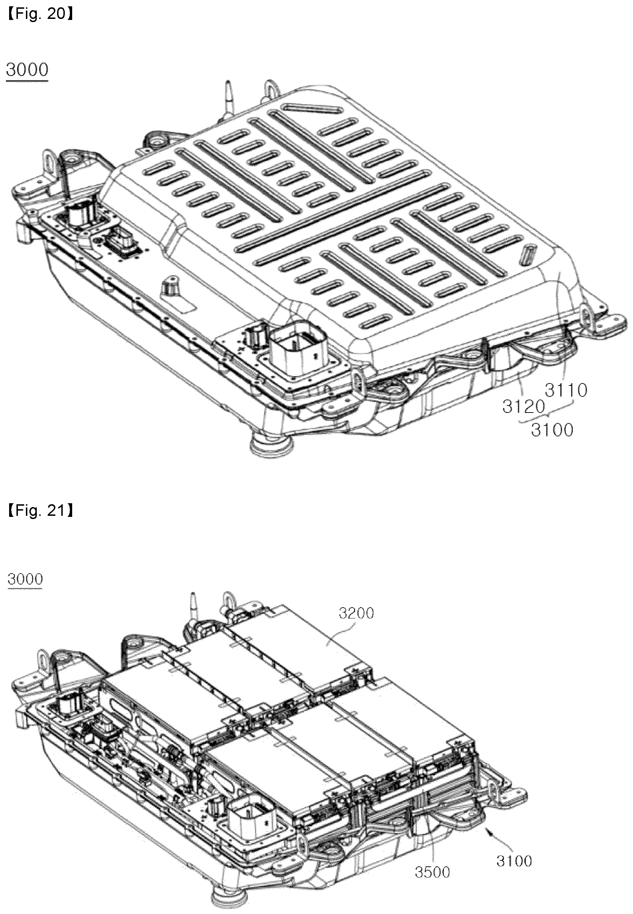

FIGS. 20 and 21 show a battery pack 3000 according to one or more example embodiments of the present disclosure. The battery pack 3000 may include a plurality of battery modules 3200 and a housing 3100 for accommodating the plurality of battery modules 3200. For example, the housing 3100 may include first and second housings 3110 and 3120 coupled in opposite directions through the plurality of battery modules 3200. The plurality of battery modules 3200 may be electrically connected to each other by using a bus bar 3500, and the plurality of battery modules 3200 may be electrically connected to each other in a series/parallel or series-parallel mixed method, thereby obtaining desired (e.g., required) electrical output. In the drawing, for convenience of illustration, parts such as bus bars, cooling units, and external terminals for electrical connection of secondary battery are omitted. In one or more example embodiments, battery pack 3300 may be mounted in a vehicle. The vehicle may be or include, for example, an electric vehicle, a hybrid vehicle, or a plug-in hybrid vehicle. A vehicle may include a four-wheeled vehicle or a two-wheeled vehicle.

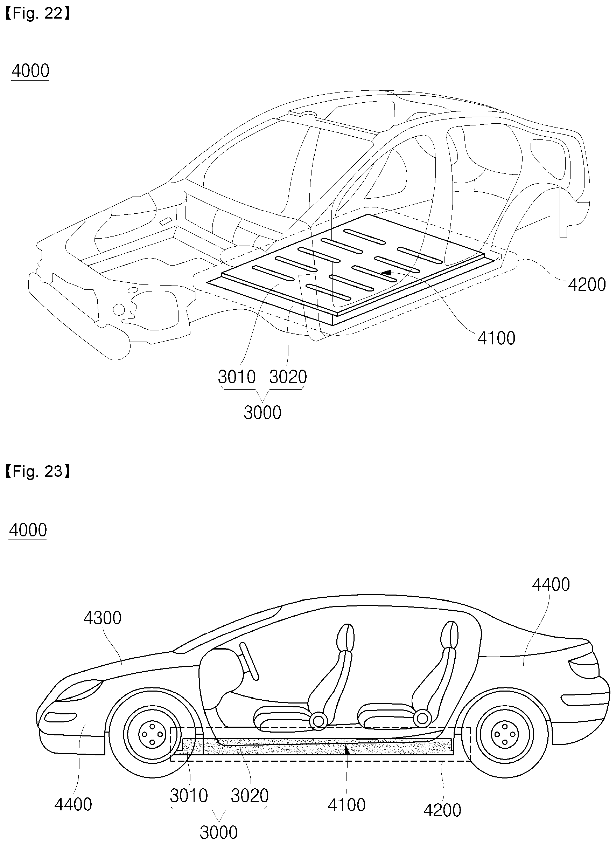

In FIG. 22, a battery pack 3000 may include a battery pack cover 3010, which is a part of a vehicle underbody 4100 and may correspond to the first housing, and a pack frame 3020, which is disposed under the vehicle underbody 4100 and may corresponding to the second housing. The battery pack cover 3010 and the pack frame 3020 may be, e.g., integrally formed with a vehicle floor 4200. The vehicle underbody 4100 separates the inside and outside of a vehicle, and the pack frame 3020 may be disposed outside the vehicle

In FIG. 23, a vehicle 4000 may be formed by combining additional parts, such as a hood 4300 in front of the vehicle 4000 and fenders 4400 respectively located in the front and rear of the vehicle 4000 to a vehicle body part. The vehicle 4000 may include the battery pack 3000 including the battery pack cover 3010 and the pack frame 3020, and the battery pack 3000 may be coupled to the vehicle body part.

The above is only one embodiment for implementing a secondary battery according to the disclosure, the disclosure is not limited to the above embodiment, and there is a technical scope of the disclosure to the extent that various modifications can be made by anyone having ordinary skill in the art to which the disclosure pertains without departing from the gist of the disclosure.

## Claims

1. An electrode assembly comprising:
a first electrode (210) including a first current collector (211), a first active material layer (212) on the first current collector (211), and an insulating member (600),
a second electrode (220) including a second current collector (221) and a second active material layer (222) on the second current collector (221), and
a separator (230) between the first electrode (210) and the second electrode (220),
wherein the second electrode (220) is larger than the first electrode (210),
wherein the first current collector (211) comprises an uncoated portion where the first active material layer (212) is not provided,
wherein the uncoated portion comprises a first region (1A) and a second region (2A) between the first region (1A) and the first active material layer (212),
wherein the insulating member (600) is disposed in the second region (2A), and
wherein the second region (2A) comprises at least one open region.

2. The electrode assembly as claimed in claim 1, wherein the first electrode (210) comprises at least one electrode tab formed by notching the first region (1A), thus forming an open region.

3. The electrode assembly as claimed in claim 2, wherein the open region extends from the end of the second region (2A) toward the first active material layer (212).

4. The electrode assembly as claimed in claim 3, wherein the open region includes a first open part (OP1) and a second open part (OP2),
wherein the first open part (OP1) is formed by removing a part of the first current collector (211) and a part of the insulating member (600), and
wherein the second open part (OP2) is formed by removing a part of the first current collector (211) and a part the first active material layer (212).

5. The electrode assembly as claimed in claim 4, wherein a length of the second open part (OP2) is shorter than a length of the first open part (OP1) or wherein the length of the second open part (OP2) is 10% to 20% of the length of the first open part (OP1).

6. The electrode assembly as claimed in claims 1 to 5, wherein a thickness of the insulating member (600) is less than or equal to a thickness of the first active material layer (212).

7. The electrode assembly as claimed in claims 2 to 6, wherein the open region comprises a 1a open region, a 1b open region, and a 1c open region,
wherein the 1a open region is closest to the at least one electrode tab,
wherein the 1c open region is farthest from the at least one electrode tab, and
wherein the 1b open region is disposed between the 1a open region and the 1c open region.

8. The electrode assembly as claimed in claim 7, wherein the at least one electrode tab includes two or more electrode tabs, and the 1a open region is disposed between the electrode tabs.

9. The electrode assembly as claimed in claim 7, wherein the sizes of the 1a open region, the 1b open region, and the 1c open region are different or wherein the size of the 1a open region is larger than the size of at least one of the 1b open region and the 1c open region.

10. The electrode assembly as claimed in claim 7, wherein the size of the open regions decrease in a direction moving away from the first electrode tab (310) such that the size of the 1c open region is the smallest of the open regions or wherein the distance between the open regions increases in a direction moving away from the first electrode tab (310).

11. The electrode assembly as claimed in claims 2 to 10, wherein the first electrode (210) includes (i) a first end (E1) of the second region (2A), (ii) a second end (E2) opposite to the first end (E1), and (iii) a third end (E3) and a fourth end (E4) connecting the first end (E1) and the second end (E2), and
wherein the first electrode (210) further comprises an open region formed in at least one of the second end (E2), the third end (E3), and the fourth end (E4) and/or wherein the at least one open region is a 1-1 open region is formed at the first end (E1),
wherein a 1-2 open region is formed at the second end (E2),
wherein a 1-3 open region is formed at the third end (E3),
wherein a 1-4 open region is formed at the fourth end (E4), and
wherein a size of the 1-1 open region is larger than a size of at least one of the 1-2 open region, the 1-3 open region, and the 1-4 open region.

12. The electrode assembly as claimed in claims 1 to 11, wherein the uncoated portion further comprises a third region (3A),
wherein the first region (1A) and the second region (2A) extend in the width direction of the first electrode (210),
wherein the third region (3A) extends in the length direction of the first electrode (210),
wherein a first insulating member (600) is disposed in the second region (2A), and
wherein a second insulating member (600) is disposed in the third region (3A).

13. The electrode assembly as claimed in claim 12, wherein the first electrode (210) comprises (i) a first end (E1) of the second region (2A), (ii) a second end (E2) facing the first end (E1), and (iii) a third end (E3) and a fourth end (E4) connecting the first end (E1) and the second end (E2),
wherein the third end (E3) is an end of the third region (3A), and
wherein the first electrode (210) further comprises an open region formed in at least one of the second end (E2), the third end (E3), and the fourth end (E4) and/or, wherein the first electrode (210) further comprises an open region formed in at least one of the second end (E2) and the fourth end (E4).

14. The electrode assembly as claimed in claims 1 to 13, wherein the second electrode (220) comprises at least one open region, and
wherein the at least one open region of the second electrode (220) is smaller than the at least one open region of the first electrode (210).

15. The secondary battery comprising:
a case (100); and
the electrode assembly of claim 1 accommodated in the case (100).
